# EUROPEAN PATENT APPLICATION

(11) **EP 1 603 130 A1**
(43) Date of publication of application: **07.12.2005**
(21) Application number: 05253330.4
(22) Date of filing: 31.05.2005
(51) Int. Cl.: G11B 20/10

(54) **Off-timer function for a video display device incorporating a recording/reproducing device**

(30) Priority: 31.05.2004 JP 2004161606
(71) Applicant: ORION ELECTRIC CO., Ltd., Takefu-City, Fukui 915-8555 (JP)
(72) Inventor: Sakon, Toshihiro c/o Orion Electric Co, Ltd, Fukui 915-8555 (JP)
(74) Representative: Paget, Hugh Charles Edward

(57) **Abstract**

The invention provides a reproducing device or recording/reproducing device having an off-timer function with improved operability, power saving, versatility and degree of freedom for the user or a video display device incorporating such a reproducing device or recording/reproducing device.

During an off-timer function operation, when reproduction of contents is detected (step 201), a contents reproducing time is calculated from TOC information (step 203, step 204), and when this contents reproducing time is shorter than a timer remaining time X of the off-timer, the timer time is regarded as a contents reproducing time (step 206, step 207), and in this way, when reproduction of contents is finished earlier than a predetermined timer time, power is turned off at the end of reproduction of contents and when the set timer time is longer than the contents reproducing time, the power is turned off at the end of the timer time.

## Description

### BACKGROUND OF THE INVENTION

### Field of the invention

The present invention relates to a reproducing device or a recording/reproducing device which reproduces contents recorded in an information recording medium or a video display device incorporating such a reproducing device or recording/reproducing device, which is providedwith a so-called off-timer or sleep timer function.

### Description of the related art

Among devices (e.g., audio device) which reproduce contents recorded in an information recording medium (e.g. , CD and DVD) and television receivers, etc. , there are ones provided with a function of automatically changing a power-on state to a power-off state after a lapse of a predetermined time (function called off-timer or sleep timer). This time interval until power is turned off can be normally selected by a user arbitrarily or selected from among predetermined choices and when an off-timer function is set, power is generally uniformly turned off after a lapse of a set time irrespective of the operating state (whether contents are being reproduced or not) of the device.

Such an off-timer function tends to involve complicated operations such as setting a timer time. In view of such a problem, a technology for simplifying the setting work is disclosed in Japanese Utility Model Laid-Open Publication No. 5-93134 (Patent Document 1), Japanese Patent Laid-Open Publication No. 7-153173 (Patent Document 2), Japanese Patent Laid-Open Publication No. 2001-74870 (Patent Document 3), etc. Furthermore, the off-timer function is generally used when the user cannot manually perform a "power-off operation" , for example, when the user goes to bed and the off-timer function is basically used assuming that there is no one who uses the device (when the operation of the device is completely useless) when the device is automatically powered off by the off-timer function, and therefore a large amount of useless power may be consumed depending on the set time of the off-timer. Conventional technologies, one of objects of which is to reduce such waste of power consumption, are disclosed in Patent Document 1 and Patent Document 4.

The conventional technology disclosed in Patent Document 1 is intended to detect an end of broadcasting of a broadcasting station, automatically turn off the power of the device and thereby eliminate the necessity for complicated operations of the off-timer setting and reduce power consumption. However, with the diversification of contents in recent years, broadcasting stations tend to finish broadcasting later and some broadcasting stations remain airing substantially 24 hours a day and there is no way to reduce power consumption substantially.

The conventional technology disclosed in Patent Document 2 is intended to automatically set a maximum reproduction time of a disk medium loaded in an audio device as an off-timer set time to simplify operation. However, with an increase in capacity of information recording media and sophistication of information compression technologies in recent years, the "maximum reproduction time of a disk medium" becomes enormous, making the aforementioned problem of power consumption more outstanding. Furthermore, the increase in capacity of information recording media and sophistication of information compression technologies are expected to further advance in the future and there is a fear that the "off-timer" will substantially not function (in the future when the case where the maximum reproduction time of an information recording medium is approximately 100 hours becomes common, power will not be turned off until 100 hours have passed). On the other hand, the conventional technology disclosed in Patent document 4 is intended to extend the user's selection range and save power by enabling the user to finely set conditions under which the off-timer is powered off, which would however complicate an off-timer setting operation. Furthermore, these technologies are executed based on TOC information recorded in a disk medium, and therefore they would not function when necessary TOC information is not obtained.

The conventional technology disclosed in Patent Document 3 sets and stores a time zone during which the off-timer function is activated and off-timer time before hand to simplify operation, but the user's life rhythm is not always the same and that "the off-timer function is automatically activated when a certain time zone comes" not only reduces the degree of freedom for the user but also requires a change of the setting or cancellation operation, etc., when the off-timer function is activated at an undesired time, which would contrarily complicate the operation.

### SUMMARY OF THE INVENTION

In view of the above described circumstances, it is an object of the present invention to provide a reproducing device or recording/reproducing device with improved operability, power saving, versatility and degree of freedom for the user in the off-timer functions or a video display device incorporating such a reproducing device or recording/reproducing device.

The reproducing device or recording/reproducing device or video display device incorporating such a reproducing device or recording/reproducing device according to the first aspect of the invention is a reproducing device or recording/reproducing device providedwith an off-timer function capable of reproducing contents recorded in an information recording medium, including timer means having a timer function, power-off means for carrying out power-off processing, storage means for storing predetermined or arbitrary numerical values and control means for controlling the entire device to thereby turn off power after a lapse of a predetermined or arbitrary set time, or video display device incorporating such a reproducing device or recording/reproducing device, comprising reproduction end detection means for detecting an end of reproduction of contents recorded in the information recording medium, wherein the lapse of time set by the off-timer function is compared with the detection of the end of reproduction of contents and the power of the device is turned off when either situation occurs earlier.

According to the above described structure, when the end of reproduction of contents recorded in the information recording medium is detected while the off-timer function is active, power-off processing is carried out even before the set time of the off-timer passes and when the end of reproduction of contents is not detected within the set time of the off-timer, power-off processing is carried out after a lapse of the set time of the off-timer.

The reproducing device or recording/reproducing device or video display device incorporating such a reproducing device or recording/reproducing device according to the second aspect of the invention is a reproducing device or recording/reproducing device providedwith an off-timer function capable of reproducing contents recorded in an information recording medium, including timermeans having a timer function, power-off means for carrying out power-off processing, storage means for storing predetermined or arbitrary numerical values and control means for controlling the entire device to thereby turn off power after a lapse of a predetermined or arbitrary set time, or video display device incorporating such a reproducing device or recording/reproducing device, comprising reproduction end detection means for detecting an end of reproduction of contents recorded in the information recording medium, wherein when the reproduction end detection means detects the end of reproduction of contents before the time set by the off-timer function passes while the off-timer function is active, the contents are reproduced again.

According to the above described structure, when the end of reproduction of contents recorded in the information recording medium is detected while the off-timer function is active, reproduction of contents is automatically repeated.

The reproducing device or recording/reproducing device or video display device incorporating such a reproducing device or recording/reproducing device according to the third aspect of the invention is a reproducing device or recording/reproducing device providedwith an off -timer function capable of reproducing contents recorded in an information recording medium, including timer means having a timer function, power-off means for carrying out power-off processing, storage means for storing predetermined or arbitrary numerical values and control means for controlling the entire device to thereby turn off power after a lapse of a predetermined or arbitrary set time, or video display device incorporating such a reproducing device or recording/reproducing device, comprising reproduction end detection means for detecting an end of reproduction of contents recorded in the information recording medium, wherein when the reproduction end detection means detects the end of reproduction of contents before the time set by the off-timer function passes while the off-timer function is active, the power-off means performs one operation of either turning off the power or reproducing contents again depending on a predetermined or arbitrary selection by the user even before the set time passes.

According to the above described structure, the user can select either turning off the power or reproducing contents repeatedly as an operation when the end of reproduction of contents recorded in the information recording medium is detected while the off-timer function is active.

The reproducing device or recording/reproducing device or video display device incorporating such a reproducing device or recording/reproducing device according to the fourth aspect of the invention is the reproducing device or recording/reproducing device or video display device incorporating such a reproducing device or recording/reproducing device according to any one of the first to thirdaspects of the invention, further comprising reproducing time calculation means for calculating a reproducing time of contents recorded in the information recording medium, wherein the reproduction end detection means is constructed of the timer means, the storage means and the reproducing time calculation means.

According to the above described structure, it is possible to decide whether "reproduction of contents" has been completed or not by comparing the reproducing time of contents recorded in the information recording medium calculated by the reproducing time calculation means with the elapsed time created by the timer means.

The reproducing device or recording/reproducing device or video display device incorporating such a reproducing device or recording/reproducing device according to the fifth aspect of the invention is the reproducing device or recording/reproducing device or video display device incorporating such a reproducing device or recording/reproducing device according to the fourth aspect of the invention, wherein the information recording medium is an optical disk medium, the reproducing device or recording/reproducing device is a disk reproducing unit or disk recording/reproducing unit and the reproducing time calculation means is constructed of the disk reproducing unit or disk recording/reproducing unit which reads TOC information of the optical disk medium, or the disk reproducing unit or disk recording/reproducing unit which reads TOC information of the optical disk medium and the control means for calculating a reproducing time of contents based on the read TOC information.

According to the above described structure, a contents reproducing time of the optical disk medium is calculated based on the TOC information recorded in a signal recording area (lead-in area) which is the innermost radius part of the optical disk medium and it is possible to decide whether "reproduction of contents" has been completed or not by comparing the contents reproducing time with the elapsed time created by the timer means.

The reproducing device or recording/reproducing device or video display device incorporating such a reproducing device or recording/reproducing device according to the sixth aspect of the invention is the reproducing device or recording/reproducing device or video display device incorporating such a reproducing device or recording/reproducing device according to any one of the first to third aspects of the invention, wherein the information recording medium is an optical disk medium, the reproducing device or recording/reproducing device is a disk reproducing unit or disk recording/reproducing unit and the reproduction end detection means is constructed of the disk reproducing unit or disk recording/reproducing unit which detects disk end information of the optical disk medium or the disk reproducing unit or disk recording/reproducing unit which detects the disk end information of the optical disk medium and the control means for deciding an end of reproduction of contents based on the detected disk end information.

According to the above described structure, it is possible to decide whether "reproduction of contents" has been completed or not by detecting the disk end information recorded in the optical disk medium.

The reproducing device or recording/reproducing device or video display device incorporating such a reproducing device or recording/reproducing device according to the ninth aspect of the invention is the reproducing device or recording/reproducing device or video display device incorporating such a reproducing device or recording/reproducing device according to any one of the first to third aspects of the invention, wherein the reproducing device or recording/reproducing device comprises a drive device which rotates or moves the information recording medium and rotation speed detection means which detects the rotation speed of a motor which is a power source of the drive device or the drive device itself and the reproduction end detection means is thereby constructed of the rotation speed detection means or the rotation speed detection means and the control means.

According to the above described structure, it is possible to decide whether "reproduction of contents" has been completed or not based on a variation of the rotation speed of the drive device or motor detected by the rotation speed detection means (e.g., an end of reproduction of contents is decided when the drive device is stopped, etc.).

According to the reproducing device or recording/reproducing device or video display device incorporating such a reproducing device or recording/reproducing device according to the first aspect of the present invention, capable of reproducing contents recorded in an information recordingmedium, comprising timer means having a timer function, power-off means for carrying out power-off processing, storage means for storing predetermined or arbitrary numerical values, control means for controlling the entire device to thereby turn off power after a lapse of a predetermined or arbitrary set time, comprising reproduction end detection means for detecting an end of reproduction of contents recorded in the information recording medium, wherein the lapse of time set by the off-timer function is compared with the detection of the end of reproduction of contents and the power of the device is turned off when either situation occurs earlier, when the end of reproduction of contents is detected while the off-timer function is active, power-off processing is carried out even before the set time of the off-timer passes, and therefore it is possible to eliminate such a state as "though the power to the device is ON, the device is not carrying out any operation such as reproduction" after reproduction of contents is completed during the off-timer setting period and when the end of reproduction of contents is not detected within the set time of the off-timer, power-off processing is carried out after a lapse of the set time of the off-timer, and therefore it is possible to save power of the device effectively. Furthermore, decision of the end of reproduction of contents and power-off processing are realized automatically and there is no need for additional setting operations for this function, and therefore it is possible to realize this function without forcing the user to perform complicated operations and provide a device provided with an off-timer function with excellent operability and power-saving characteristics.

According to the reproducing device or recording/reproducing device or video display device incorporating such a reproducing device or recording/reproducing device according to the second aspect of the invention, capable of reproducing contents recorded in an information recording medium, comprising timer means having a timer function, power-off means for carrying out power-off processing, storage means for storing predetermined or arbitrary numerical values, control means for controlling the entire device to thereby turn off power after a lapse of a predetermined or arbitrary set time, comprising reproduction end detection means for detecting an end of reproduction of contents recorded in the information recording medium, wherein when the reproduction end detection means detects the end of reproduction of contents before the time set by the off-timer function passes while the off-timer function is active, the contents are reproduced again, when the end of reproduction of contents is detected while the off-timer function is active, reproduction of contents is automaticallyrepeated, and therefore it is possible to eliminate such a state as "though the power to the device is ON, the device is not carrying out any operation such as reproduction" after reproduction of contents is completed during the off-timer setting period. The user may prefer that the power to the device be turned OFF after a lapse of a preset timer time and the present invention has no such a period during which contents are not reproduced while the off-timer function is active and turns OFF the power after a lapse of time desired by the user and is therefore suitable for such a user. Furthermore, decision of the end of reproduction of contents and restart of reproduction of contents are realized automatically and there is no need for additional setting operations for this function, and therefore it is possible to realize this function without forcing the user to perform complicated operations and provide a device provided with an off-timer function with excellent operability.

According to the reproducing device or recording/reproducing device or video display device incorporating such a reproducing device or recording/reproducing device according to the fourth aspect of the invention, which is the reproducing device or recording/reproducing device or video display device incorporating such a reproducing device or recording/reproducing device according to any one of the first to third aspects of the invention, further comprising reproducing time calculation means for calculating a reproducing time of contents recorded in the information recording medium, wherein the reproduction end detection means is thereby constructed of the timer means, the storage means and the reproducing time calculationmeans, it is possible to decide whether "reproduction of contents" has been completed or not by comparing the reproducing time of contents recorded in the information recording medium calculated by the reproducing time calculation means with the elapsed time created by the timer means, thereby accurately decide when reproduction of contents is finished, and when the end of reproduction of contents is detected with the off-timer function set, power-off processing is automatically carried out even before the set time of the off-timer passes, and therefore it is possible to provide a device provided with the off-timer function with improved power-saving characteristics without requiring complicated setting operations. Or when the end of reproduction of contents is detected with the off-timer function set, reproduction of contents is automatically repeated, and therefore it is possible to eliminate a situation that there is no reproduction operation within the set off-timer time without requiring complicated setting operations.

According to the reproducing device or recording/reproducing device or video display device incorporating such a reproducing device or recording/reproducing device according to the fifth aspect of the invention, which is the reproducing device or recording/reproducing device or video display device incorporating such a reproducing device or recording/reproducing device according to the fourth aspect of the invention, wherein the information recording medium is an optical disk medium, the reproducing device or recording/reproducing device is a disk reproducing unit or disk recording/reproducing unit and the reproducing time calculation means is constructed of the disk reproducing unit or disk recording/reproducing unit which reads TOC information of the optical disk medium, or the disk reproducing unit or disk recording/reproducing unit which reads TOC information of the optical disk medium and the control means for calculating a reproducing time of contents based on the read TOC information, a contents reproducing time is calculated based on the TOC information recorded in a signal recording area (lead-in area) which is the innermost radius part of the optical disk medium and it is possible to decide whether "reproduction of contents" has been completed or not by comparing the contents reproducing time with the elapsed time created by the timer means, and therefore the present invention provides high degree of freedom for the user and has excellent power-saving characteristics. That is, there are apparatuses for reproducing an optical disk medium such as CD provided with a variety of reproduction modes through so-called program reproduction, etc., and this is the function realized based on TOC information and can calculate a total reproducing time of contents even when the variety of reproduction modes are used, and therefore it is possible to use a variety of reproduction modes when the off-timer of the present invention is set. For example, in the case of a CD with 10 music pieces recorded, when a function (so-called programmed reproduction) of selecting and reproducing only the third, fourth and seventh music pieces is used, it is possible to obtain a total reproduction time (e.g. , suppose 10 minutes) of the third, fourth and seventh music pieces, and therefore when the programmed reproduction is used when the off-timer of the present invention is set, power-off processing is carried out (or reproduction of contents is automatically repeated until the timer time passes) after a lapse of 10 minutes after reproduction is started even before the set time of the off-timer passes. As described above, the present invention can use a variety of contents reproduction functions when the off-timer is set and provide a high degree of freedom for the user, excellent operability and power-saving characteristics.

According to the reproducing device or recording/reproducing device or video display device incorporating such a reproducing device or recording/reproducing device according to the sixth aspect of the invention, which is the reproducing device or recording/reproducing device or video display device incorporating such a reproducing device or recording/reproducing device according to any one of the first to third aspects of the invention, wherein the information recording medium is an optical disk medium, the reproducing device or recording/reproducing device is a disk reproducing unit or disk recording/reproducing unit and the reproduction end detection means is constructed of the disk reproducing unit or disk recording/reproducing unit which detects disk end information of the optical disk medium or the disk reproducing unit or disk recording/reproducing unit which detects the disk end information of the optical disk medium and the control means for deciding an end of reproduction of contents based on the detected disk end information, it is possible to decide whether reproduction of contents has been completed or not by detecting the disk end information recorded in the optical disk medium, and therefore it is possible to detect an end of reproduction of contents of an optical diskmediummore reliably. For example, even when TOC information includes errors such as fault, corruption, loss and it is not possible to detect an end of reproduction of contents based on TOC information correctly, it is possible to decide "end of reproduction of contents" by detecting disk end information recorded in the outermost radius part (lead-out area) of the disk. Recordable optical disk media and devices are becoming widespread in recent years and their recording systems are diversified, and some of these devices even allow the user to edit TOC information, and therefore there is no guarantee that the TOC information is necessarily provided with predetermined information and recordable disk media are more liable to corruption or loss (situation in which information cannot be read), etc. , of information compared to read-only disk media, and TOC information is also likely to be lost. However, even with a disk medium including such defective TOC information, the present invention can detect an end of reading of a disk, decide this as the end of reproduction of contents and thereby improve reliability of decision on the end of reproduction of contents.

According to the reproducing device or recording/reproducing device or video display device incorporating such a reproducing device or recording/reproducing device according to the ninth aspect of the invention, which is the reproducing device or recording/reproducing device or video display device incorporating such a reproducing device or recording/reproducing device according to any one of the first to third aspects of the invention, wherein the reproducing device or recording/reproducing device comprises a drive device which rotates or moves the information recording medium and rotation speed detection means which detects the rotation speed of a motor which is a power source of the drive device or the drive device itself and the reproduction end detection means is thereby constructed of the rotation speed detection means or the rotation speed detection means and the control means, it is decided whether "reproduction of contents" has been completed or not based on a variation of the rotation speed of the drive device or motor detected by the rotation speed detection means, and therefore the present invention is not directly affected by differences in methods of recording information in an information recording medium or missing of information (e.g., corruption or loss of TOC information in the optical disk medium), and it is thereby possible to provide high degree of versatility and make decision on the end of reproduction of contents more reliable.

### BRIEF DESCRIPTION OF THE DRAWINGS

FIG. 1 is a perspective view showing an LCD with a built-in DVD recording/reproducing device according to Embodiment 1;
FIG. 2 is a block diagram schematically showing only parts of the LCD with a built-in DVD recording/reproducing device according to Embodiment 1 related to the present invention;
FIG. 3 is an example of a screen display when an off-timer function according to Embodiment 1 is set;
FIG. 4 is a flow chart schematically showing the operation when the off-timer function according to Embodiment 1 is set;
FIG. 5 is a flow chart schematically showing the off-timer operation according to Embodiment 1;
FIG. 6 is a flow chart schematically showing the operation of auto-off processing of the off-timer function according to Embodiment 1;
FIG. 7 is a flow chart schematically showing the operation of auto-repeat processing of the off-timer function according to Embodiment 1.

### DETAILED DESCRIPTION OF THE PREFERRED EMBODIMENT

With reference now to the attached drawings, preferred embodiments of the present invention will be explained below. However, the following embodiments are only examples in embodying the present invention and not intended to limit the present invention to within the scope of those embodiments.

### [Embodiment 1]

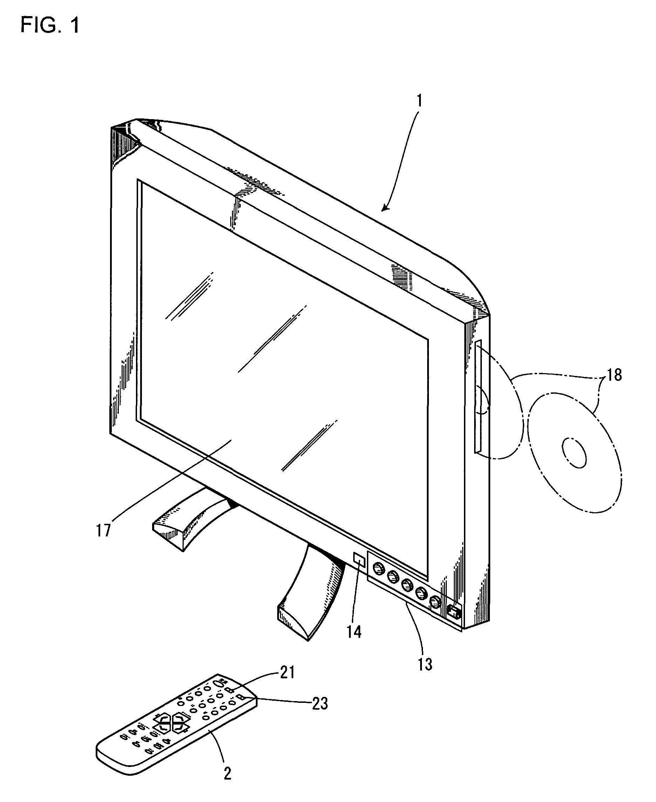

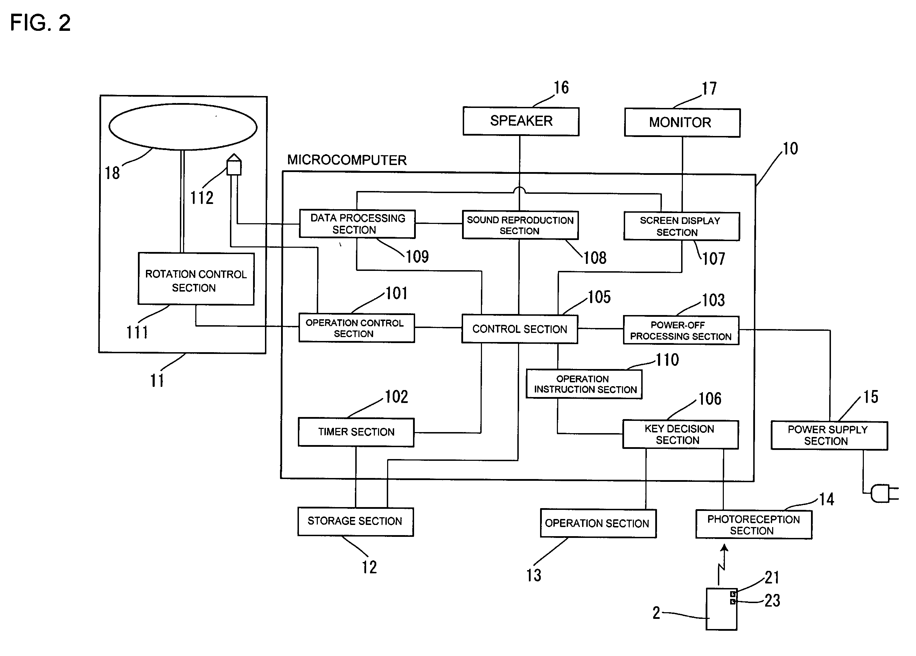

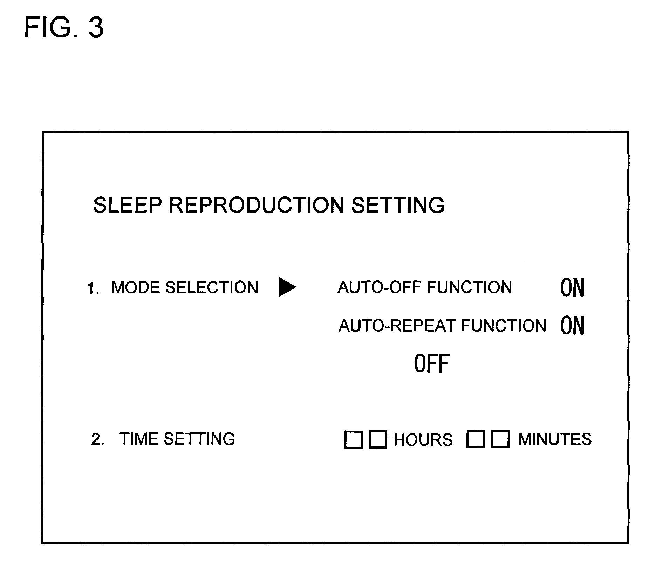

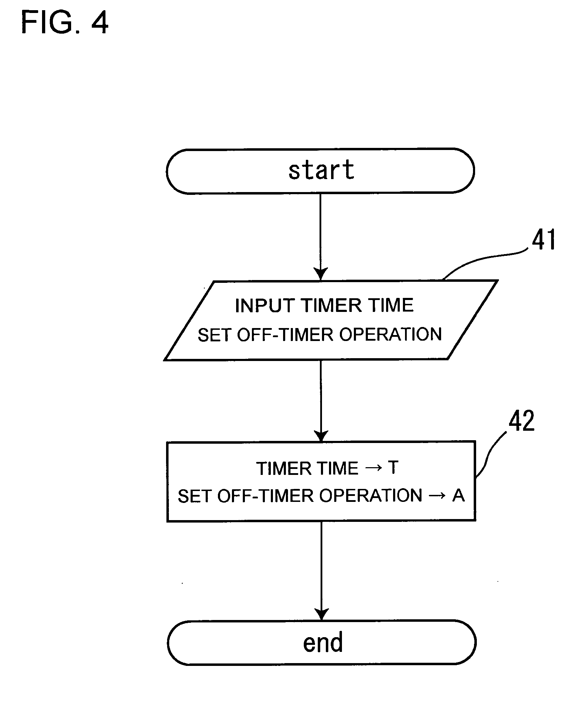

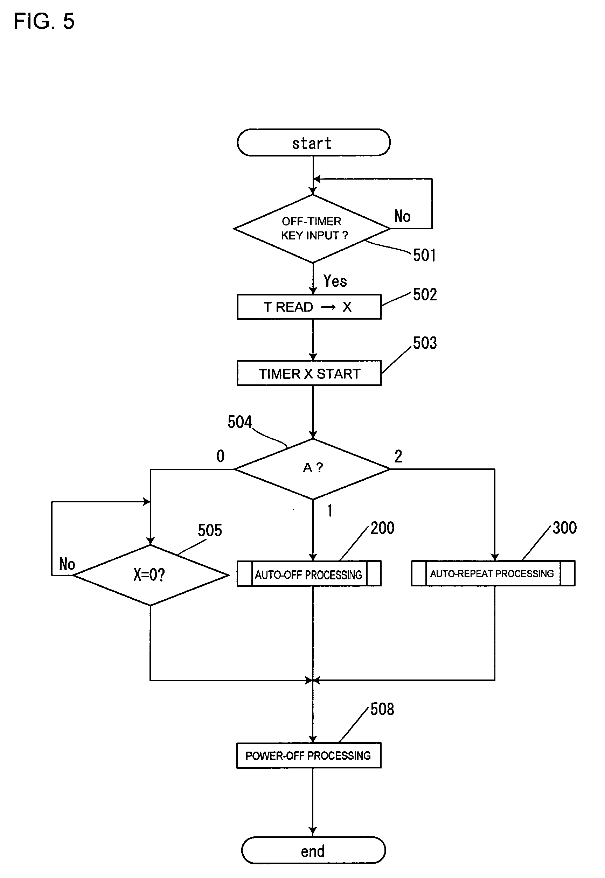

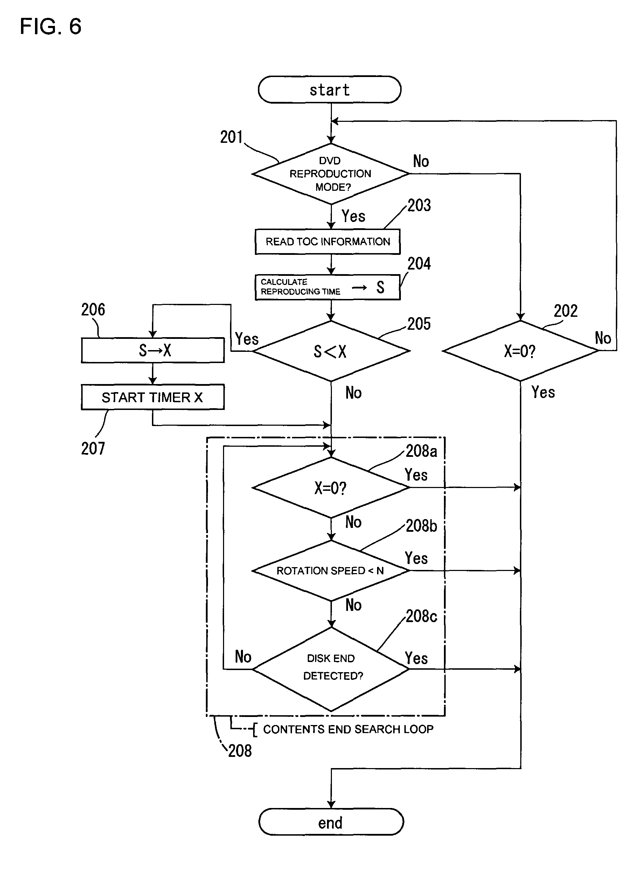

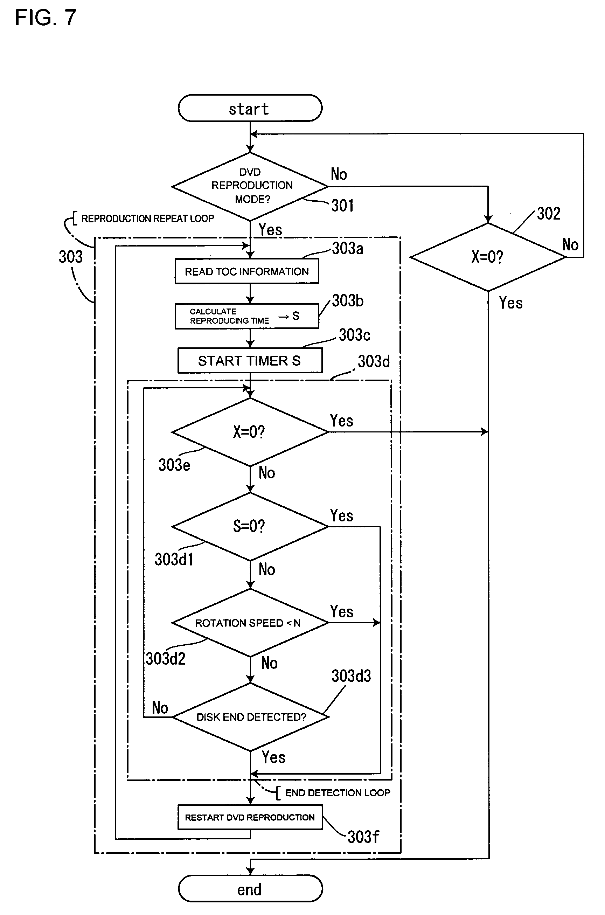

FIG. 1 is a perspective view showing an LCD with a built-in DVD recording/reproducing device of this embodiment, FIG. 2 is a block diagram schematically showing only parts of the LCD with a built-in DVD recording/reproducing device related to the present invention. FIG. 3 shows an example of a screen display when an off-timer function is set, FIG. 4 is a flow chart schematically showing the operation when the off-timer function is set and FIG. 5 is a flow chart schematically showing the off-timer operation. FIG. 6 is a flow chart schematically showing the operation of auto-off processing of the off-timer function and FIG. 7 is a flow chart schematically showing the operation of auto-repeat processing of the off-timer function.

The LCD 1 with a built-in DVD recording/reproducing device of this embodiment (hereinafter simply referred to as "LCD 1 with a built-in DVD") is provided, as shown in FIG. 2, with a microcomputer 10 which is control means for controlling the entire device, a disk recording/reproducing unit 11, a storage section 12 which is storage means, an operation section 13, a photoreception section 14, a power supply section 15, a speaker 16 and a monitor 17, etc. The disk recording/reproducing unit 11 is provided with a rotation control section 111 and an optical pickup 112, etc., and the microcomputer 10 is provided with an operation control section 101 which controls the operation of the disk recording/reproducing unit 11, a timer section 102 which is timer means, a power-off processing section 103 which is power-off means, a data processing section 109, an operation instruction section 110 and a control section 105, etc. The rotation control section 111 is provided with a spindle motor (not shown) which is a drive device for rotating an optical disk medium 18 (DVD) and controls the rotation of the drive device while detecting the rotation speed of the drive device. The optical pickup 112 reads a signal recorded in the optical disk medium 18 or records a signal in the optical disk medium 18, and the optical pickup 112, operation control section 101 and data processing section 109 or the optical pickup 112, operation control section 101, data processing section 109 and control section 105 perform processing of detecting and acquiring TOC information, contents information and disk end information, etc. , recorded in the optical disk medium 18.

An overview of the initial setting operation for the off-timer function will be explained with reference to FIG. 2, FIG.3,andFIG.4. An input operation of a setting key 21 provided for a remote control device 2 sets an off-timer function setting mode, causing the setting screen shown in FIG. 3 to appear on the monitor 17 and a cursor operation or input of numerical values using the remote control device 2 selects an operating mode when the off-timer is in operation (turning on either the auto-off function or auto-repeat function or turning off both functions) and sets a timer time of the off-timer. At this time, the control section 105 controls a screen display section 107 to perform a display according to an instruction from the operation instruction section 110, acquires setting information on the timer time and operating mode when the off-timer is in operation (step 41 in FIG. 4) and stores the information in the storage section 12 (step 42). The timer time of the off-timer refers to a time until the off-timer function is set in a power-off state. The auto-off function is the function of turning off the power even before the timer time elapses when it is decided that reproduction of contents is completed when the off-timer function is in operation and the auto-repeat function is the function of automatically reproducing contents again when it is decided that reproduction of contents is completed when the off-timer function is in operation. According to this embodiment, 1 is substituted into A when the auto-off function is ON, 2 is substituted into A when the auto-repeat function is ON and 0 is substituted into A when the auto-off function and auto-repeat function are OFF (step 42). In the operation of the initial setting of the off-timer function, the remote control device 2 is assumed to be used, but it is also possible to perform the setting operation using the operation section 13 provided on the main body of the LCD 1 with a built-in DVD or set the off-timer function setting mode simultaneously with other functions of the LCD 1 with a built-in DVD (parts of the setting items such as a menu mode, etc.) so as to eliminate the necessity for the setting key 21 which is a dedicated key to transition to the off-timer function setting mode.

Next, an overview of the operation of the off-timer function will be explained with reference of FIG. 2, FIG. 5, FIG. 6, and FIG. 7. An input to an off-timer key 23 of the remote control device 2 causes transition to an off-timer mode (step 501 in FIG. 5). The control section 105 causes the timer section 102 to start the timer with the value of a timer time T (T is substituted into X) stored in the storage section 12 (step 502, step 503). In step 504, it is decided whether the value of A stored in the storage section 12 is 1 (auto-off function ON), 2 (auto-repeat function ON) or 0 (both auto-off function and auto-repeat function OFF) and when it is 0, it is decided in step 505 whether the timer time X of the timer section 102 is 0 or not and when it becomes 0, the control section 105 causes the power-off processing section 103 to perform power-off processing and finishes the processing (step 508). On the other hand, when the value of A is 1 in step 504, the process moves to auto-off processing 200 and when the value of A is 2, the process moves to auto-repeat processing 300. The auto-off processing 200 is the processing defined in FIG. 6 and the auto-repeat processing 300 is the processing defined in FIG. 7, and the processing will be explained below.

An overview of the operation of the auto-off processing 200 will be explained with reference to FIG. 6. In step 201, the control section 105 decides whether the contents of the optical disk medium 18 are being reproduced or not, and if the contents are not being reproduced, the control section 105 moves to step 202. In step 202, it is decided whether the timer time X of the timer section 102 is 0 or not and if it is not 0, the control section 105 returns to step 201 and when it becomes 0, the control section 105 finishes the auto-off processing 200. On the other hand, when it is decided in step 201 that the contents of the optical disk medium 18 are being reproduced, the control section 105 acquired TOC information of the optical disk medium 18 (step 203), calculates the contents reproducing time from the current reproducing state and TOC information and substitutes this contents reproducing time into S (step 204). The control section 105 compares S (current remaining contents reproduction time) and X (current timer remaining time) (step 205), substitutes X with the value of S when S falls below X, causes the timer of the timer section 102 to restart with the value (current remaining contents reproduction time) (step 206, step 207). In a contents end detection loop 208, when the decision in step 208a whether the timer time X of the timer section 102 results in 0 or the result of a decision in step 208b whether the rotation speed obtained from the rotation control section 111 is below N or not shows that the rotation speed is below N or the result of a decision in step 208c whether the control section 105, optical pickup 112 and data processing section 109 have detected disk end information from the optical disk medium 18 or not shows that the disk end information has been detected, the control section 105 closes the loop and finishes the auto-off processing 200. When the end of reproduction of contents (X=0, rotation speed <N, disk end information) is not detected in the contents end detection loop 208, the control section 105 repeats steps 208a to 208c. It is possible to detect an end of reproduction of contents or abnormal end effectively by setting the rotation speed N to a value (can also be 0) that cannot be taken in a normal contents reproduction state.

Next, an overview of the operation of the auto-repeat processing 300 will be explained with reference to FIG. 7. In step 301, the control section 105 decides whether the contents of the optical disk medium 18 are being reproduced or not, and when the contents are not being reproduced, the control section 105 moves to step 302. In step 302, the control section 105 decides whether the timer time X of the timer section 102 is 0 or not, and when it is not 0, the control section 105 returns to step 301 and when it becomes 0, the control section 105 finishes the auto-repeat processing 300. On the other hand, when it is decided in step 301 that the contents of the optical disk medium 18 are being reproduced, the control section 105 moves to a reproduction repeat loop 303. In the reproduction repeat loop 303, the control section 105 acquires TOC information of the optical disk medium 18 (step 303a), calculates the contents reproduction time from the current reproduction state and TOC information and substitutes this into S (step 303b). Next, in step 303c, the control section 105 causes the timer to start with the time S obtained in step 303b, and when an end of reproduction of contents is detected in an end detection loop 303d, the control section 105 causes the operation control section 101 and data processing section 109 to restart reproduction of the contents of the optical disk medium 18 (step 303f). In the end detection loop 303d, the end of reproduction of contents is decided by detecting a timer time S (contents reproducing time)=0 (step303d1), rotation speed <N (step 303d2), disk end information (step 303d3) as in the case of the contents end detection loop 208 in the auto-off processing 200 (FIG. 6). In the end detection loop 303d of the reproduction repeat loop 303, when the timer time X of the timer section 102 becomes 0 (end of the set time of the off-timer), the loop is finished (step 303e) and the auto-repeat processing 300 is finished. This causes reproduction of the DVD (optical disk medium 18) to be repeated until the set time of the off-timer(X) becomes 0 and when the set time of the off-timer (X) becomes 0, the processing of the auto-repeat processing 300 is finished.

With the termination of the above described auto-off processing 200 (end of step 200 in FIG. 5) or termination of the auto-repeat processing 300 (end of step 300 in FIG. 5), the process moves to step 508 and in step 508, the control section 105 causes the power-off processing section 103 to perform power-off processing to finish the operation of the off-timer function.

As described above, according to the LCD 1 with a built-in DVD of this embodiment, the user can select the use of the auto-off function or the use of auto-repeat function in the operating mode when the off-timer is in operation by setting the operating mode during a timer time and off-timer time beforehand. When the user selects the auto-off function ON beforehand, if, for example, reproduction of the DVD (optical disk medium 18) is started while using the off-timer function (in the loop in step 201 and step 202), the DVD contents reproducing time is calculated (step 203, step 204), and if this is shorter than the current timer remaining time of the off-timer, the timer time of the off-timer is substituted by the contents reproducing time of the DVD (step 206, step 207). Therefore, even if the timer remaining time of the off-timer is, for example, 1 hour and 34 minutes, if the reproducing time of the DVD is only 50 minutes, power-off processing is performed after a lapse of 50 minutes (end of reproduction of contents), and therefore it is possible to eliminate a state in which "though nothing is reproduced, the power to the device remains ON. " Furthermore, when the DVD reproducing time is 7 hours while the timer remaining time is 1 hour and 34 minutes, priority is given to the current timer remaining time (step 205) and power-off processing is performed after a lapse of the timer time, and therefore power-saving of the device is realized effectively. On the other hand, when the user selects an auto-repeat function ON beforehand, for example, when an off-timer function is operated (input of the off-timer key 23) during reproduction of the DVD (optical disk medium 18), the remaining contents reproduction time (S) of the DVD is calculated from the TOC information and current DVD reproducing state (step 303a, step 303b) and the timer is started at the time S (step 303c). Therefore, even when the timer time (X) of the off-timer is, for example, 1 hour and the remaining reproducing time (S) of the DVD is 23 minutes, the timer S becomes 0 (DVD reproduction end), reproduction of the DVD is automatically restarted in step 303d1 and step 303f and the reproduction of the contents is automatically repeated, and therefore it is possible to eliminate such a state in which there is no reproduction within a preset off-timer time (T).

Furthermore, after the first setting operation is performed, no complicated operation is required to use the off-timer function (due to an input operation of off-timer key 23), which provides excellent operability for the user. Furthermore, when calculating the contents reproducing time in step 203, step 204 (step 303a, step 3093b), it is possible to calculate the contents reproducing time in many types of reproduction mode realized based on the TOC information, and when, for example, the user reproduces only chapter 7, it is also possible to use a method of use carrying out power-off processing after a lapse of reproducing time of chapter 7 (continues to repeat reproduction of only chapter 7 until the off-timer time has passed), which increases the degree of freedom for the user who uses the off-timer function. In addition, since an end of reproduction of contents is decided based on the detection of the disk end information of the optical disk medium 18 and the rotation speed of the drive device which operates the optical disk medium 18, it is possible to detect the end of reproduction of contents more reliably and improve reliability of the operation of the off-timer function.

According to this embodiment, the set timer time of the off-timer is held and used, but it is also possible to set the timer time when using the off-timer function. Furthermore, this embodiment has been explained using a disk recording/reproducing unit (DVD) as the reproducing device or recording/reproducing device, but the present invention is not limited to this and it goes without saying that the present invention is also applicable to a CD, MD, etc., and the present invention is also applicable to a memory medium or magnetic disk device, etc., by obtaining the contents reproducing time based on the contents information corresponding to the TOC information in an optical disk medium according to each medium and recording system (with a magnetic disk device such as HDD, it is also possible to decide an end of reproduction of contents by detecting the disk rotation speed).

## Claims

1. A reproducing device or recording/reproducing device provided with an off-timer function capable of reproducing contents recorded in an information recording medium, including timer means having a timer function, power-off means for carrying out power-off processing, storage means for storing predetermined or arbitrary numerical values and control means for controlling the entire device to thereby turn off power after a lapse of a predetermined or arbitrary set time, or video display device incorporating such a reproducing device or recording/reproducing device,
comprising reproduction end detection means for detecting an end of reproduction of contents recorded in said information recording medium,
wherein the lapse of time set by said off-timer function is compared with the detection of the end of reproduction of contents and the power of the device is turned off when either situation occurs earlier.

2. A reproducing device or recording/reproducing device provided with an off-timer function capable of reproducing contents recorded in an information recording medium, including timer means having a timer function, power-off means for carrying out power-off processing, storage means for storing predetermined or arbitrary numerical values and control means for controlling the entire device to thereby turn off power after a lapse of a predetermined or arbitrary set time, or video display device incorporating such a reproducing device or recording/reproducing device,
comprising reproduction end detection means for detecting an end of reproduction of contents recorded in said information recording medium,
wherein when said reproduction end detection means detects the end of reproduction of contents before the time set by said off-timer function passes while said off-timer function is active, the contents are reproduced again.

3. A reproducing device or recording/reproducing device provided with an off-timer function capable of reproducing contents recorded in an information recording medium, including timer means having a timer function, power-off means for carrying out power-off processing, storage means for storing predetermined or arbitrary numerical values and control means for controlling the entire device to thereby turn off power after a lapse of a predetermined or arbitrary set time, or video display device incorporating such a reproducing device or recording/reproducing device,
comprising reproduction end detection means for detecting an end of reproduction of contents recorded in said information recording medium,
wherein when said reproduction end detection means detects the end of reproduction of contents before the time set by said off-timerfunctionpasses while saidoff-timer function is active, one operation of either turning off the power or reproducing contents again is performed depending on a predetermined or arbitrary selection by the user even before said set time passes.

4. The reproducing device or recording/reproducing device or video display device incorporating such a reproducing device or recording/reproducing device according to any one of claims 1 to 3, further comprising reproducing time calculation means for calculating a reproducing time of contents recorded in said information recording medium,
wherein said reproduction end detectionmeans is constructed of said timer means, said storage means and said reproducing time calculation means.

5. The reproducing device or recording/reproducing device or video display device incorporating such a reproducing device or recording/reproducing device according to claim 4,
wherein said information recording medium is an optical disk medium,
said reproducing device or recording/reproducing device is a disk reproducing unit or disk recording/reproducing unit, and
said reproducing time calculation means is constructed of said disk reproducing unit or disk recording/reproducing unit which reads TOC information of the optical disk medium, or said disk reproducing unit or disk recording/reproducing unit which reads TOC information of the optical disk medium and said control means for calculating a reproducing time of contents based on said read TOC information.

6. The reproducing device or recording/reproducing device or video display device incorporating such a reproducing device or recording/reproducing device according to any one of claims 1 to 3,
wherein said information recording medium is an optical disk medium,
said reproducing device or recording/reproducing device is a disk reproducing unit or disk recording/reproducing unit, and
said reproduction end detection means is constructed of said disk reproducing unit or disk recording/reproducing unit which detects disk end information of the optical disk medium or said disk reproducing unit or disk recording/reproducing unit which detects the disk end information of the optical disk medium and said control means for deciding an end of reproduction of contents based on said detected disk end information.

7. The reproducing device or recording/reproducing device or video display device incorporating such a reproducing device or recording/reproducing device according to any one of claims 1 to 3,
wherein said reproducing device or recording/reproducing device comprises a drive device which rotates or moves said information recording medium and rotation speed detection means which detects the rotation speed of a motor which is a power source of said drive device or said drive device itself, and
said reproduction end detection means is thereby constructed of said rotation speed detection means or said rotation speed detection means and said control means.
